# FASCICULE DE BREVET EUROPEEN

(11) **EP 1 072 811 B1**
(45) Date de publication et mention de la délivrance du brevet: **17.05.2006**
(21) Numéro de dépôt: 00401969.1
(22) Date de dépôt: 07.07.2000
(51) Int. Cl.: F16D 23/06

(54) **Dispositif de maintien de deux joncs d'armement dans un moyeu de synchronisation pouvant être utilisé dans un ensemble synchroniseur pour une transmission d'un véhicule automobile**
Haltevorrichtung für zwei ringförmige Federn der Synchronsperre in einer Synchronisationsnabe geeignet für Synchronisiereinrichtungen bei Kraftfahrzeug-Getrieben
Retaining device for two resilient expander blocking rings in a synchronizer hub suitable for the use in a synchronizer arrangement of a vehicle transmission

(30) Priorité: 26.07.1999 FR 9909667
(43) Date de publication de la demande: 31.01.2001
(73) Titulaire: Peugeot Citroen Automobiles SA, 92200 Neuilly sur Seine (FR)
(72) Inventeur: Delporte, Stéphane, 91190 St. Aubin (FR)
(74) Mandataire: Thinat, Michel

(56) Documents cités:
- DE-A- 2 122 947
- US-A- 2 221 900

## Description

La présente invention concerne un ensemble constitué de deux joncs d'armement et d'un dispositif de maintien de ceux-ci pour un moyeu de synchronisation pouvant être utilisé dans un ensemble synchroniseur pour une transmission d'un véhicule automombile.

Elle concerne également un moyeu de synchronisation et un ensemble synchroniseur pour une transmission d'un véhicule automobile comprenant un tel ensemble.

On sait que le fonctionnement d'un synchroniseur se compose de plusieurs phases à partir de la phase de point mort de la transmission et comprenant la phase d'armement, la phase de synchronisation et la phase de crabotage.

Dans les synchroniseurs actuellement connus, par exemple par US-A-2 221 900, pendant la phase de point mort de la transmission, les joncs d'armement sont libres de se placer chacun entre la bague de synchronisation et le moyeu de synchronisation dans une limite appelée la garde au léchage.

Cependant, si les joncs d'armement se trouvent plaqués contre les bagues de synchronisation, la trainée de boîte de vitesses est très importante et nuit à la qualité de passage de vitesse.

Aussi, lors de la phase de crabotage, un résidu d'armement dû au frottement du jonc sur le manchon de crabotage rend plus difficile le dévirage du pignon de transmission par rapport à la bague de synchronisation.

La présente invention a pour but d'éliminer les inconvénients ci-dessus en proposant une solution par laquelle les joncs d'armement se trouvent toujours plaqués contre le moyeu de crabotage, évitant ainsi, au point mort, une trainée nuisible de boîte de vitesses.

A cet effet, l'ensemble selon l'invention comprend les caractéristiques de la revendication 1, et est caractérisé en ce que les deux joncs d'armement, de configuration plane, sont jumelés par au moins deux organes rappelant élastiquement l'un vers l'autre les deux joncs d'armement pour, à l'état monté dans le moyeu, plaquer des portions de ceux-ci sur des parties correspondantes respectivement de deux faces radiales opposées d'une paroi centrale du moyeu de synchronisation.

Le moyeu de synchronisation selon l'invention, avec un ensemble selon la revendication 1, comprend trois secteurs dentés extérieurement solidaires de la paroi centrale concentriquement à celle-ci en faisant saillie de part et d'autre de la paroi centrale de façon à délimiter deux logements annulaires respectivement des deux joncs d'armement comprenant chacun trois portions saillantes arquées radialement concaves et trois portions rentrantes arquées radialement concaves, dont chacune est située entre deux portions saillantes, chaque portion saillante faisant saillie à l'extérieur du moyeu de synchronisation à travers une partie évidée correspondante définie entre deux secteurs dentés adjacents et chaque portion rentrante d'un jonc d'armement étant en appui sur la face interne arquée radialement concave du secteur denté correspondant délimitant en partie le logement annulaire du moyeu de synchronisation, les deux joncs d'armement étant jumelés par trois organes élastiques de rappel des portions rentrantes de chaque jonc sur les parties de la face radiale correspondante du moyeu de synchronisation, chaque organe élastique de rappel étant solidarisé à deux portions saillantes en regard l'une de l'autre des deux joncs d'armement pour rappeler l'une vers l'autre les deux portions saillantes.

De préférence, dans le moyeu de synchronisation chaque organe de élastique rappel est constitué par une agrafe comprenant au moins deux pattes élastiques d'agrafage fixées respectivement à deux portions saillantes en vis-à-vis des deux joncs d'armement et reliées l'une à l'autre par une partie de liaison située en dessous des deux portions saillantes.

De préférence, dans le moyeu de synchronisation l'agrafe comprend deux autres pattes élastiques reliées l'une à l'autre par la même partie de liaison précitée et fixées respectivement aux deux portions saillantes en vis-à-vis des deux joncs d'armement.

De préférence, dans le moyeu de synchronisation les deux pattes élastiques d'agrafage et la partie de liaison présentent sensiblement la forme d'un Vé et sont fixées entre les deux portions saillantes correspondantes des joncs d'armement.

De préférence, dans le moyeu de synchronisation les deux pattes élastiques d'agrafage sont fixées aux portions saillantes des deux joncs d'armement par encliquetage.

De préférence, dans le moyeu de synchronisation l'agrafe comprend en outre deux languettes élastiques d'arc-boutement prolongeant respectivement les deux pattes d'agrafage sensiblement parallèlement à ces dernières et faisant saillie en dessous du plan contenant la partie de liaison des pattes d'agrafage.

De préférence, dans le moyeu de synchronisation chaque portion rentrante d'un jonc d'armement est reliée par deux branches latérales respectivement à deux portions saillantes adjacentes du jonc et les deux branches latérales sont inclinées en sens inverse l'une de l'autre.

Selon l'invention, l'ensemble synchroniseur pour une transmission d'un véhicule automobile avec un ensemble selon la revendication 1, comprend un moyeu de synchronisation solidaire d'un arbre mené ; un manchon de crabotage monté sur le moyeu de synchronisation en engrènement avec ce dernier et pouvant être déplacé axialement relativement au moyeu de synchronisation par une fourchette de commande ; au moins une bague de synchronisation située adjacente à un côté du moyeu de synchronisation ; au moins un pignon de transmission à couronne dentée de crabotage monté tourillonnant sur l'arbre mené et axialement espacé de la bague de synchronisation qui peut être engagée par friction avec le pignon de transmission lors d'un déplacement axial du manchon de crabotage ; et au moins un jonc d'armement logé en partie dans le moyeu de synchronisation et pouvant être déplacé axialement par le manchon de crabotage lors de son déplacement vers sa position d'engrènement avec la couronne de crabotage; deux bagues de synchronisation situées de part et d'autre du moyeu de synchronisation et entre deux pignons de transmission opposés à couronnes dentées de crabotage et les deux joncs d'armement de configuration plane logés en partie dans le moyeu de synchronisation de chaque côté de celui-ci en regard de la bague de synchronisation correspondante et qui sont jumelés par au moins les deux organes rappelant élastiquement l'un vers l'autre les deux joncs d'armement pour plaquer des portions internes de ceux-ci respectivement sur des parties correspondantes de deux faces radiales opposées d'une paroi centrale du moyeu de synchronisation, chaque jonc d'armement pouvant être déplacé vers le pignon de transmission correspondant par le manchon de crabotage qui agit sur des portions du jonc d'armement externes au moyeu de synchronisation.

De préférence, dans l'ensemble synchroniseur le moyeu de synchronisation comprend trois secteurs dentés extérieurement solidaires de la paroi centrale concentriquement à celle-ci en faisant saillie de part et d'autre de la paroi centrale de façon à délimiter deux logements annulaires respectivement des deux joncs d'armement comprenant chacun trois portions saillantes externes arquées radialement concaves et trois portions rentrantes internes arquées radialement concaves, dont chacune est située entre deux portions saillantes, chaque portion saillante faisant saillie à l'extérieur du moyeu de synchronisation à travers une partie évidée correspondante définie entre deux secteurs dentés adjacents et chaque portion rentrante du jonc d'armement étant en appui sur la face interne arquée radialement concave du secteur denté correspondant définissant en partie le logement annulaire du moyeu de synchronisation, les deux joncs d'armement étant jumelés par trois organes élastiques de rappel des portions rentrantes de chaque jonc sur les parties de la face radiale correspondante du moyeu de synchronisation, chaque organe élastique de rappel étant solidarisé à deux portions saillantes en regard l'une de l'autre des deux joncs d'armement pour rappeler l'une vers l'autre ces deux portions saillantes.

De préférence, dans l'ensemble synchroniseur chaque organe de rappel élastique est constitué par une agrafe comprenant au moins deux pattes élastiques d'agrafage fixée respectivement à deux portions saillantes en vis-à-vis des deux joncs d'armement et reliées l'une à l'autre par une partie de liaison située en dessous des deux portions saillantes.

De préférence, dans l'ensemble synchroniseur l'agrafe comprend deux autres pattes élastiques reliées l'une à l'autre par la même partie de liaison précitée et fixées respectivement aux deux portions saillantes en vis-à-vis des deux joncs d'armement.

De préférence, dans l'ensemble synchroniseur les deux pattes élastiques d'agrafage et la partie de liaison présentent sensiblement la forme d'un Vé et sont fixées entre les deux portions saillantes correspondantes des joncs d'armement.

De préférence, dans l'ensemble synchroniseur les deux pattes élastiques d'agrafage sont fixées aux portions saillantes des deux joncs d'armement par encliquetage.

De préférence, dans l'ensemble synchroniseur l'agrafe comprend en outre deux languettes élastiques d'arc-boutement prolongeant respectivement les deux pattes d'agrafage sensiblement parallèlement à ces dernières et faisant saillie en dessous du plan contenant la partie de liaison des pattes d'agrafage et venant chacune élastiquement en appui sur une face radiale de la bague de synchronisation correspondante.

De préférence, dans l'ensemble synchroniseur le manchon de crabotage comprend des parties formant rampes internes situées de part et d'autre des deux joncs d'armement et pouvant contacter, lors du déplacement axial relatif du manchon de crabotage dans un sens déterminé, les côtés internes des portions saillantes du jonc d'armement correspondant pour déplacer axialement et concomitamment le jonc d'armement et la bague de synchronisation associée qui est amenée en engagement par friction avec le pignon de transmission associé.

De préférence, dans l'ensemble synchroniseur chaque portion rentrante d'un jonc d'armement est reliée par deux branches latérales respectivement à deux portions saillantes adjacentes du jonc et les deux branches latérales sont inclinées en sens inverse l'une de l'autre.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant plusieurs modes de réalisation de l'invention.

La figure 1 est une vue éclatée en perspective de différents éléments d'un ensemble synchroniseur pour une transmission d'un véhicule automobile conforme à l'invention.

La figure 2 représente en demi-coupe longitudinale supérieure l'ensemble synchroniseur comprenant le dispositif de l'invention permettant de maintenir élastiquement les deux joncs d'armement dans le moyeu de crabotage.

La figure 3 est une vue semblable à celle de la figure 2 et représentant une variante de réalisation du dispositif de maintien des deux joncs d'armement.

La figure 4 est une vue semblable à celle de la figure 2 et représentant une autre variante de réalisation du dispositif de maintien des deux joncs d'armement.

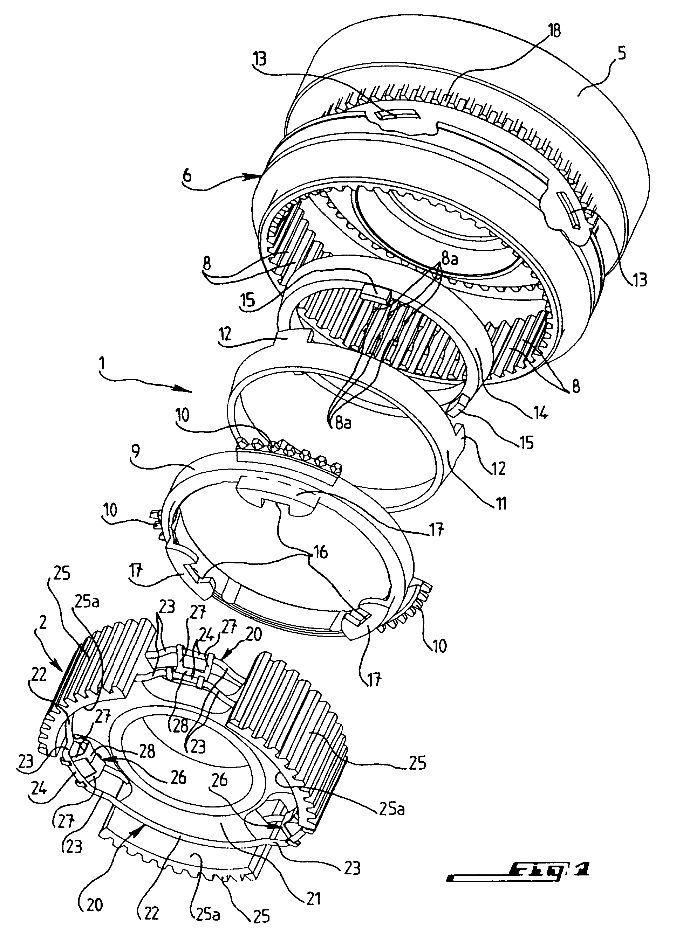

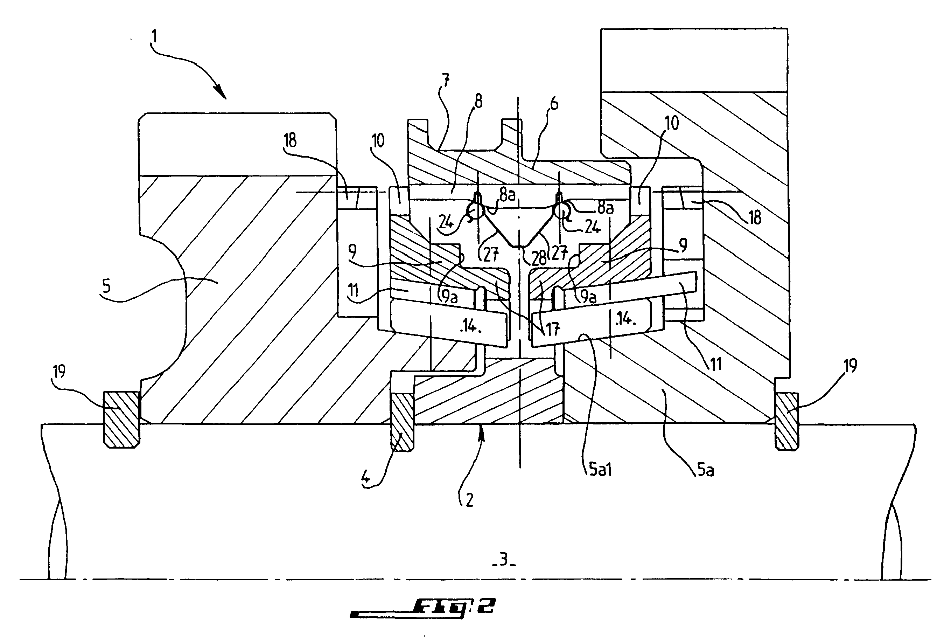

En se reportant aux figures 1 et 2, l'ensemble synchroniseur 1 pour une transmission d'un véhicule automobile comprend un moyeu de synchronisation 2 solidaire en rotation d'un arbre mené 3 par l'intermédiaire de cannelures (non représentées). Le moyeu de synchronisation 2 est immobilisé en translation sur l'arbre 3 d'une part par un anneau d'arrêt 4 monté dans une gorge périphérique externe de l'arbre 3 et d'autre part par une face radiale de l'un, celui de droite par rapport à la figure 2, de deux pignons de transmission 5 montés tourillonnants sur l'arbre 3 de part et d'autre du moyeu de synchronisation 2.

L'ensemble synchroniseur 1 comprend également un manchon de crabotage 6 pouvant être déplacé axialement, c'est-à-dire parallèlement à l'arbre 3, par une fourchette de commande (non représentée) engagée dans une gorge radialement externe 7 du manchon de crabotage 6 qui comporte des cannelures internes 8 assurant l'engrènement du manchon 6 sur le pourtour du moyeu de synchronisation 2 tout en permettant le déplacement axial du manchon 6 relativement au moyeu 2.

L'ensemble synchroniseur 1 comprend au moins deux bagues intérieurement tronconiques de synchronisation identiques 9 situées de part et d'autre du moyeu de synchronisation 2 de façon adjacente à celui-ci et pouvant être chacune déplacée axialement vers le pignon de transmission correspondant 5, suivant le sens de déplacement du manchon de crabotage 6, pour engager par friction la bague de synchronisation 9 avec le pignon de transmission 5. Chaque bague de synchronisation 9 comporte trois secteurs dentés externes 10 angulairement équidistants situés à l'extérieur du moyeu de synchronisation 2, et est ainsi logée en grande partie dans un logement annulaire du moyeu de synchronisation 2 et qui sera défini ultérieurement.

L'ensemble synchroniseur 1 comprend en outre de chaque côté du moyeu de synchronisation 2 deux autres bagues tronconiques concentriques de synchronisation pouvant être engagées l'une dans l'autre par friction lors du déplacement dans le sens correspondant du manchon de crabotage 6 et comprenant respectivement la bague de synchronisation 11 pouvant venir en contact par friction dans la bague de synchronisation 9 et comportant trois tenons angulairement équidistants 12 faisant saillie axialement de la face radiale de la bague 11 à l'opposé de la bague 9 et s'engageant respectivement dans trois mortaises conjuguées 13 réalisées dans le flan correspondant du pignon de transmission 5 ; et la bague de synchronisation 14 pouvant s'engager par friction dans la bague 11 et comprenant trois tenons angulairement équidistants 15 faisant saillie axialement de la face radiale de la bague 14 à l'opposé du pignon de transmission 5 et s'engageant respectivement dans trois rainures radiales 16 de trois bossages 17 faisant saillie de la face radiale de la bague de synchronisation 9 en définissant un épaulement tronconique.

Chaque pignon de transmission 5 comprend une couronne dentée extérieurement de crabotage 18 sur laquelle peut venir en engrènement le manchon de crabotage 6. Les deux pignons de transmission 5 sont immobilisés en translation relativement à l'arbre 3 par deux anneaux d'arrêt extrêmes 19 montés respectivement dans deux gorges externes de l'arbre 3.

Selon l'invention, l'ensemble synchroniseur 1 comprend deux joncs élastiques d'armement 20, de configuration plane, logés respectivement dans deux logements annulaires du moyeu de synchronisation 2 situé de part et d'autre de la paroi centrale de moyeu 21 de façon qu'un déplacement du manchon de crabotage 6 dans un sens déterminé provoque le déplacement concomittant dans le même sens du jonc d'armement correspondant 20 et des bagues de synchronisation associées 9, 11, 14 pour les engager par friction avec la portée tronconique conjuguée 5a1 d'une partie centrale formant moyeu 5a du pignon de transmission correspondant 5.

Pour cela, chaque jonc d'armement 20 comprend trois portions rentrantes arquées radialement concaves et équidistantes 22 reliées par deux branches latérales 23 respectivement à deux portions saillantes adjacentes 24 de ce jonc, les deux branches latérales 23 d'une même portion saillante étant inclinées en sens inverse l'une de l'autre. Pour permettre le logement des deux joncs d'armement 20 dans le moyeu de synchronisation 2, celui-ci comprend trois secteurs dentés extérieurement 25 solidaires de la paroi centrale 21 concentriquement à celle-ci en faisant saillie de part et d'autre de cette paroi de façon à délimiter, par leurs faces internes arquées radialement concaves 25a les deux logements annulaires respectivement des deux joncs d'armement 20. Plus précisément, les portions rentrantes 22 de chaque jonc d'armement 20 sont disposées dans leur logement annulaire correspondant en appui sur les trois faces internes 25a des secteurs dentés 25 et les trois portions saillantes 24 de ce jonc font chacune saillie dans une partie évidée correspondante définie entre deux secteurs dentés adjacents 25. Chaque jonc d'armement 20 est immobilisé en rotation relativement au moyeu de synchronisation 2 par ses branches latérales 23 en appui, par leurs zones de liaison avec les portions rentrantes 22, sur le bord transversal correspondant de chaque secteur denté.

Les deux joncs d'armement 20 sont jumelés par trois organes 26 rappelant élastiquement l'un vers l'autres les deux joncs 20 pour plaquer les trois portions rentrantes 22 de chacun d'eux sur des parties correspondantes de l'une des deux faces radiales opposées de la paroi centrale de moyeu 21. Comme cela ressort mieux de la figure 1, chaque organe élastique de rappel 26 est constitué par une agrafe comprenant deux paires circonférentiellement espacées de pattes élastiques 27 fixées respectivement à deux portions saillantes en vis-à-vis 24 des deux joncs d'armement 20 et qui sont reliées les unes aux autres par une partie de liaison commune située en dessous des parties saillantes 24. Les deux pattes 27 de chaque paire et la partie de liaison associée 28 présentent la forme générale d'un Vé et ces pattes sont recourbées à leurs extrémités libres de façon à permettre leur fixation par encliquetage sur les deux portions saillantes 24 des deux joncs 20 comme cela ressort mieux de la figure 2. Ainsi, pour fixer chaque agrafe de fixation, il suffit d'engager la partie de liaison 28 entre les deux portions saillantes correspondantes 24 des deux joncs 20 puis d'exercer sur les pattes 27 un effort engageant élastiquement, par encliquetage, leurs extrémités sur les portions saillantes 24 de façon que l'agrafe soit retenue entre les deux portions saillantes 24 et puissent exercer l'effort permettant de les rappeler l'une vers l'autre.

Bien entendu, chaque agrafe 26 peut comporter uniquement deux pattes élastiques 27 reliées par une partie de liaison 28 et rappelant élastiquement deux portions saillantes correspondantes du jonc 20. De plus, le jonc 20 peut comporter uniquement deux portions rentrantes 22 et deux portions saillants adjacentes 24.

La figure 2 montre également que les trois bossages 17 de la bague de synchronisation 9 sont engagés dans les parties évidées du moyeu de synchronisation 2 en étant situés en dessous des parties de liaison 28 des pattes 27 des agrafes de fixation des joncs 20. Cette figure montre en outre que les extrémités des pattes 27 des agrafes de fixation, qui font légèrement saillie au dessus des portions saillantes 24 des joncs 20, sont deux à deux logées dans l'espace correspondant entre deux cannelures 8 du manchon de crabotage 6 afin de ne pas gêner le déplacement de celui-ci relativement au moyeu de synchronisation 2. En outre, la ou les cannelures 8 du manchon de crabotage 6 situées juste au dessus de chacune des paires en vis-à-vis des portions saillantes 24 des joncs 20 sont usinées de façon à définir de part et d'autre des deux portions saillantes 24 en position de point mort de l'ensemble synchroniseur 1, deux parties formant rampes 8a inclinées en sens inverse l'une de l'autre.

Le fonctionnement de l'ensemble synchroniseur ressort déjà de la description qui en a été faite ci-dessus et va être maintenant expliqué.

Lorsque le manchon de crabotage 6 est déplacé axialement vers la droite par rapport à la figure 2 par la fourchette de commande, les parties formant rampes 8a du manchon 6 agissent sur les côtés internes des portions rentrantes 24 du jonc correspondant 20, situé à droite, pour déplacer axialement le jonc 20, à l'encontre de la force de rappel des pattes élastiques 27 des agrafes de fixation, 2, 6 de façon que les portions rentrantes 22 du jonc 20 viennent en appui sur une face radiale interne 9a de la bague de synchronisation 9 qui est déplacée axialement, ainsi que les deux autres bagues de synchronisation 11, 14, pour les amener en contact par friction les unes avec les autres et amener en contact par friction la bague 14 sur la portée tronconique 5al du pignon de transmission 5. Le manchon de crabotage 6 s'engrène ensuite succéssivement avec les secteurs dentés 10 de la bague de synchronisation 9 et la couronne dentée 18 du pignon de transmission 5, résultant alors en une rotation du moyeu 2, du manchon 6, des bagues de synchronisation 9, 11, 14 et du pignon 5. Le déplacement du manchon de crabotage 7 vers la gauche par rapport à la figure 2 provoque un déplacement axial des éléments situés à gauche du moyeu de synchronisation 2 de façon identique aux éléments décrits précédemment à droite de ce moyeu de sorte qu'il est inutile de décrire à nouveau les conséquences de ce déplacement à gauche du manchon de crabotage 6.

En tout cas, lors de la phase de crabotage, chaque jonc d'armement 20, ayant passé les rampes d'armement 8a, revient se placer élastiquement contre le moyeu 2, libérant ainsi la bague de synchronisation 9 et favorisant de ce fait le dévirage.

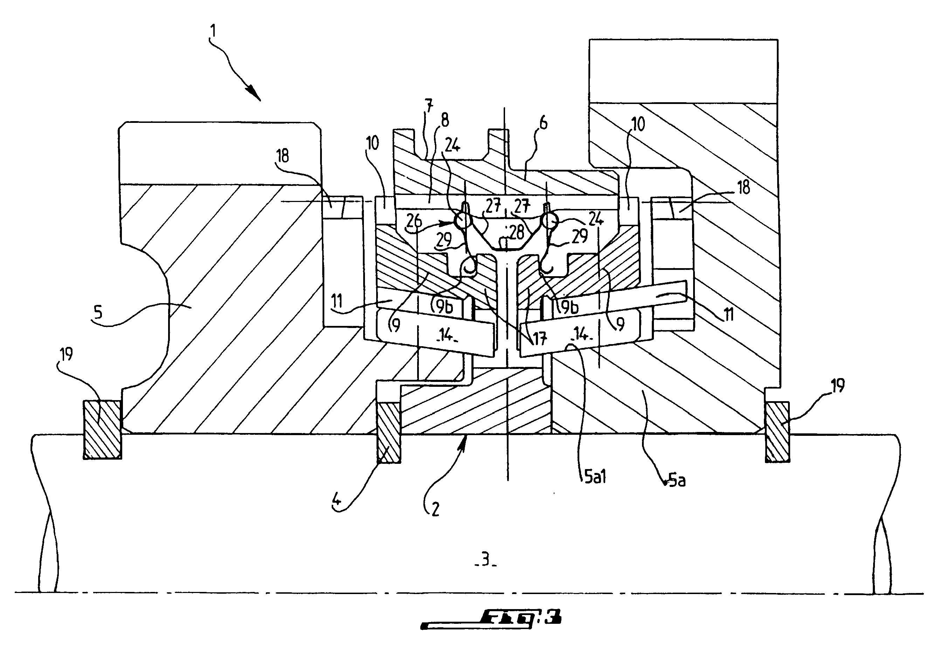

Selon le mode de réalisation représenté en figure 3, chaque agrafe 26 comprend en plus, par rapport aux agrafes 26 des figures 1 et 2, deux languettes élastiques 29 prolongeant respectivement les extrémités de chaque paire de pattes 27 en regard l'une de l'autre de l'agrafe 26 dans un sens sensiblement parallèle aux pattes 27 en faisant saillie en dessous du plan contenant la partie de liaison 28 des pattes 27. Les extrémités des languettes élastiques 29 sont recourbées et sont arc-boutées en appui sur deux faces radiales 9b respectivement des deux bagues de synchronisation 9. Ces lames 29 permettent de rappeler chaque bague de synchronisation 9 à sa position de point mort.

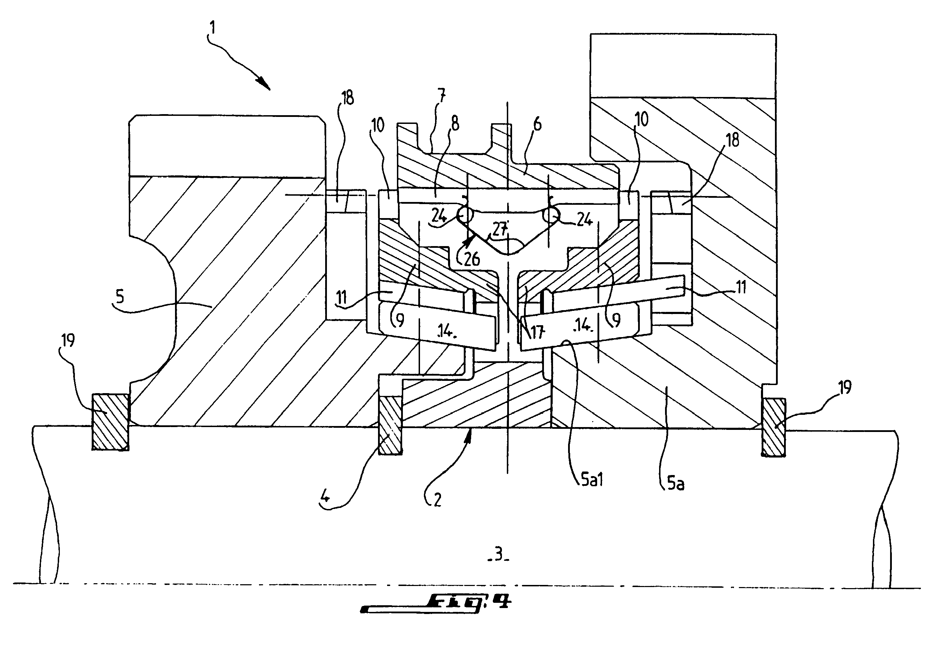

Selon le mode de réalisation représenté en figure 4, les extrémités des pattes 27 de chaque agrafe 26, au lieu d'être recourbées de façon à enserrer de l'intérieur pratiquement complétement la circonférence des portions saillantes correspondantes 24 des deux joncs d'armement 20, enveloppent partiellement des côtés extérieurs d'approximativement une demi-circonférence chaque portion saillante 24 et sont recourbées en sens inverse à leurs extrémités en faisant saillie dans l'interstice entre deux cannelures adjacentes 8 du manchon de crabotage 6.

Le dispositif de maintien élastique des deux joncs d'armement permet de les plaquer efficacement contre le moyeu de synchronisation, évitant ainsi une trainée nuisible de boîte de vitesses pendant la phase de point mort et permettant de diminuer le résidu d'armement pendant la phase de crabotage.

## Revendications

1. Ensemble constitué de deux joncs d'armement (20) et d'un dispositif de maintien de ceux-ci pour un moyeu de synchronisation (2) pouvant être utilisé dans un ensemble synchroniseur (1) pour une transmission d'un véhicule automobile, **caractérisé en ce que** le dispositif de maintien comprend au moins deux organes (26) jumelant les deux joncs d'armement (20) de configuration plane et rappelant élastiquement l'un vers l'autre les deux joncs d'armement (20) pour, à l'état monté dans le moyeu, plaquer des portions (22) de ceux-ci sur des parties correspondantes respectivement de deux faces radiales opposées d'une paroi centrale (21) du moyeu de synchronisation (1).

2. Moyeu de synchronisation avec un ensemble selon la revendication 1, **caractérisé en ce que** le moyeu de synchronisation (2) comprend trois secteurs dentés extérieurement (25) solidaires de la paroi centrale (21) concentriquement à celle-ci en faisant saillie de part et d'autre de la paroi centrale (21) de façon à délimiter deux logements annulaires respectivement des deux joncs d'armement (20) comprenant chacun trois portions saillantes arquées radialement concaves (24) et trois portions rentrantes arquées radialement concaves (22), dont chacune est située entre deux portions saillantes (24), chaque portion saillante (24) faisant saillie à l'extérieur du moyeu de synchronisation (2) à travers une partie évidée correspondante définie entre deux secteurs dentés adjacents (25) et chaque portion rentrante (22) d'un jonc d'armement (20) étant en appui sur la face interne arquée radialement concave (25a) du secteur denté correspondant (25) délimitant la partie de logement annulaire du moyeu de synchronisation (2) et **en ce qu'**il comprend trois organes (26) de jumelage des deux joncs d'armement (20) plaquant élastiquement les portions rentrantes (22) de chaque jonc (20) sur les parties de la face radiale correspondante du moyeu de synchronisation (2), chaque organe élastique de rappel (26) étant solidarisé à deux portions saillantes (24) en regard l'une de l'autre des deux joncs d'armement (20) pour rappeler l'une vers l'autre ces deux portions saillantes (24).

3. Moyeu de synchronisation selon la revendication 2, **caractérisé en ce que** chaque organe de rappel élastique (26) est constitué par une agrafe comprenant au moins deux pattes élastiques d'agrafage (27) fixées respectivement à deux portions saillantes en vis-à-vis (24) des deux joncs d'armement (20) et reliées l'une à l'autre par une partie de liaison (28) située en dessous des deux portions saillantes (24).

4. Moyeu de synchronisation selon la revendication 3, **caractérisé en ce que** l'agrafe (26) précitée comprend deux autres pattes élastiques (27) reliées l'une à l'autre par la même partie de liaison (28) précitée et fixées respectivement aux deux portions saillantes (24) en vis-à-vis des deux joncs d'armement (20).

5. Moyeu de synchronisation selon la revendication 3 ou 4, **caractérisé en ce que** les deux pattes élastiques d'agrafage (27) et la partie de liaison (28) présentent sensiblement la forme d'un Vé et sont fixées entre les deux portions saillantes correspondantes (24) des joncs d'armement (20).

6. Moyeu de synchronisation selon l'une des revendications 3 à 5, **caractérisé en ce que** les deux pattes élastiques d'agrafage (27) sont fixées aux portions saillantes correspondantes (24) des deux joncs d'armement (20) par encliquetage.

7. Moyeu de synchronisation selon l'une des revendications 3 à 6, **caractérisé en ce que** l'agrafe (26) comprend en outre deux languettes élastiques d'arc-boutement prolongeant respectivement les deux pattes d'agrafage (27) sensiblement parallèlement à ces dernières et faisant saillie en dessous du plan contenant la partie de liaison (28) des pattes d'agrafage (27).

8. Moyeu de synchronisation selon l'une des revendications 2 à 7, **caractérisé en ce que** chaque portion rentrante (22) d'un jonc d'armement (20) est reliée par deux branches latérales (23) respectivement à deux portions saillantes adjacentes (24) du jonc (20) et les deux branches latérales (23) sont inclinées en sens inverse l'une de l'autre.

9. Ensemble synchroniseur pour une transmission d'un véhicule automobile avec un ensemble selon la revendication 1, comprenant un moyeu de synchronisation (2) solidaire d'un arbre mené (3) ; un manchon de crabotage (6) monté sur le moyeu de synchronisation (2) en engrènement avec ce dernier et pouvant être déplacé axialement relativement au moyeu de synchronisation (2) par une fourchette de commande ; au moins une bague de synchronisation (9) située adjacente à un côté du moyeu de synchronisation (2) ; au moins un pignon de transmission (5) à couronne dentée de crabotage (18) monté tourillonnant sur l'arbre mené (3) et axialement espacé de la bague de synchronisation (9) qui peut être engagée par friction avec le pignon de transmission (5) lors d'un déplacement axial du manchon de crabotage (6) ; et au moins un jonc d'armement (20) logé en partie dans le moyeu de synchronisation (2) et pouvant être déplacé axialement par le manchon de crabotage (6) lors de son déplacement vers sa position d'engrènement avec la couronne de crabotage (18); au moins deux bagues de synchronisation (9) situées de part et d'autre du moyeu de synchronisation (2) et entre deux pignons de transmission opposés (5) à couronnes dentées de crabotage (18) et les deux joncs d'armement (20), de configuration plane, logés en partie dans le moyeu de synchronisation (2) de chaque côté de celui-ci en regard de la bague de synchronisation correspondante (9) et qui sont jumelés par au moins les deux organes (26) rappelant élastiquement l'un vers l'autre les deux joncs d'armement (20) pour plaquer des portions internes (22) de ceux-ci respectivement sur des parties correspondantes de deux faces radiales opposées d'une paroi centrale (21) du moyeu de synchronisation (2), chaque jonc d'armement (20) pouvant être déplacé vers le pignon de transmission correspondant (5) par le manchon de crabotage (6) qui agit sur des portions (24) du jonc d'armement (20) externes au moyeu de synchronisation (2).

10. Ensemble synchroniseur selon la revendication 9, **caractérisé en ce que** le moyeu de synchronisation (2) comprend trois secteurs dentés extérieurement (25) solidaires de la paroi centrale (21) concentriquement à celle-ci en faisant saillie de part et d'autre de la paroi centrale (21) de façon à délimiter deux logements annulaires (25a) respectivement des deux joncs d'armement (20) comprenant chacun trois portions saillantes externes arquées radialement concaves (24) et trois portions rentrantes internes arquées radialement concaves (22), dont chacune est située entre deux portions saillantes (24), chaque portion saillante (24) faisant saillie à l'extérieur du moyeu de synchronisation (2) à travers une partie évidée correspondante définie entre deux secteurs dentés adjacents (25) et chaque portion rentrante (22) du jonc d'armement (20) étant en appui sur la face interne arquée radialement concave (25a) du secteur denté correspondant (25) définissant en partie le logement annulaire du moyeu de synchronisation (2) et **en ce que** les deux joncs d'armement (20) sont jumelés par trois organes élastiques (26) de rappel des portions rentrantes (22) de chaque jonc (20) sur les parties de la face radiale correspondante du moyeu de synchronisation (2), chaque organe élastique de rappel (26) étant solidarisé à deux portions saillantes (24) en regard l'une de l'autre des deux joncs d'armement (20) pour rappeler l'une vers l'autre ces deux portions saillantes (24).

11. Ensemble synchroniseur selon la revendication 10, **caractérisé en ce que** chaque organe élastique de rappel (26) est constitué par une agrafe comprenant au moins deux pattes élastiques d'agrafage (27) fixées respectivement à deux portions saillantes en vis-à-vis (24) des deux joncs d'armement (20) et reliées l'une à l'autre par une partie de liaison (28) située en dessous des deux portions saillantes (24).

12. Ensemble synchroniseur selon la revendication 11, **caractérisé en ce que** l'agrafe (26) précitée comprend deux autres pattes élastiques (27) reliées l'une à l'autre par la même partie de liaison (28) précitée et fixées respectivement aux deux portions saillantes en vis-à-vis (24) des deux joncs d'armement (20).

13. Ensemble synchroniseur selon la revendication 11 ou 12, **caractérisé en ce que** les deux pattes élastiques d'agrafage (27) et la partie de liaison (28) présentent sensiblement la forme d'un Vé et sont fixées entre les deux portions saillantes correspondantes (24) des joncs (20).

14. Ensemble synchroniseur selon l'une des revendications 11 à 13, **caractérisé en ce que** les deux pattes élastiques d'agrafage (27) sont fixées aux portions saillantes (24) des deux joncs d'armement (20) par encliquetage.

15. Ensemble synchroniseur selon l'une des revendications 11 à 14, **caractérisé en ce que** l'agrafe (26) comprend en outre deux languettes élastiques d'arc-boutement prolongeant respectivement les deux pattes d'agrafage (27) sensiblement parallèlement à ces dernières et faisant saillie en dessous du plan contenant la partie de liaison (28) des pattes d'agrafage (27) et venant chacune élastiquement en appui sur une face radiale de la bague de synchronisation correspondante (9) .

16. Ensemble synchroniseur selon l'une des revendications 9 à 15, **caractérisé en ce que** le manchon de crabotage (6) comprend des parties formant rampes internes (8a) situées de part et d'autre des deux joncs d'armement (20) et pouvant contacter, lors du déplacement axial relatif du manchon de crabotage (6) dans un sens déterminé, les côtés internes des portions saillantes (24) du jonc d'armement correspondant (20) pour déplacer axialement et concomitamment le jonc d'armement (20) et la bague de synchronisation associée (9) qui est amenée en engagement par friction avec le pignon de transmission associé (5).

17. Ensemble synchroniseur selon l'une des revendications 10 à 16, **caractérisé en ce que** chaque portion rentrante (22) d'un jonc d'armement (20) est reliée par deux branches latérales (23) respectivement à deux portions saillantes adjacentes (24) du jonc (20) et les deux branches latérales (23) sont inclinées en, sens inverse l'une de l'autre.

## Claims

1. An assembly consisting of two pre-engagement rings (20) and a device for holding the latter for a synchromesh hub (2) which may be used in a synchronizer assembly (1) for a transmission system of a motor vehicle, **characterized in that** the holding device comprises at least two members (26) joining both pre-engagement rings (20) of planar configuration and elastically drawing back both pre-engagement rings (20) towards each other, in the mounted condition in the hub, for pressing portions (22) of the latter on respectively corresponding portions of two opposite radial faces of a central wall (21) of the synchromesh hub (1).

2. A synchromesh hub with an assembly according to claim 1, **characterized in that** the synchromesh hub (2) comprises three externally toothed segments (25) firmly attached to the central wall (21), concentrically to the latter by protruding on either side of the central wall (21) so as to delimit two annular housings of both pre-engagement rings (20) respectively, each comprising three radially concave arched protruding portions (24) and three radially concave arched retracting portions (22), each of which is located between two protruding portions (24), each protruding portion (24) protruding towards the outside of the synchromesh hub (2) through a corresponding recessed portion defined between two adjacent toothed segments (25) and each retracting portion (22) of a pre-engagement ring (20) being supported on the radially concave arched internal face (25a) of the corresponding toothed segment (25) delimiting the annular housing portion of the synchromesh hub (2) and **in that** it comprises three members (26) for joining both of the pre-engagement rings (20) elastically pressing the retracting portions (22) of each ring (20) onto the portions of the corresponding radial face of the synchromesh hub (2), each elastic return member (26) being firmly attached to two protruding portions (24) facing each other of both pre-engagement rings (20) in order to draw back both of these protruding portions (24) towards each other.

3. The synchromesh hub according to claim 2, **characterized in that** each elastic return member (26) consists of a fastener comprising at least two elastic fastening tabs (27) respectively attached to two protruding portions facing each other (24) of both pre-engagement rings (20) and connected to each other by a connecting portion (28) located below both protruding portions (24).

4. The synchromesh hub according to claim 3, **characterized in that** the aforementioned fastener (26) comprises two other elastic tabs (27) connected to each other by the same aforementioned connecting portion (28) and respectively attached to two protruding portions (24) facing each other of both pre-engagement rings (20).

5. The synchromesh hub according to claim 3 or 4, **characterized in that** both fastening elastic tabs (27) and the connecting portion (28) substantially have the shape of a V and are attached between both corresponding protruding portions (24) of the pre-engagement rings (20).

6. The synchromesh hub according to any of claims 3 to 5, **characterized in that** both elastic fastening tabs (27) are attached to the corresponding protruding portions (24) of both pre-engagement rings (20) by a detent mechanism.

7. The synchromesh hub according to any of claims 3 to 6, **characterized in that** the fastener (26) further comprises two butting elastic strips extending both fastening tabs (27) substantially parallel to the latter and protruding below the plane containing the connecting portion (28) of the fastening tabs (27) respectively.

8. The synchromesh hub according to any of claims 2 to 7, **characterized in that** each retracting portion (22) of a pre-engagement ring (20) is connected with two side branches (23) to two adjacent protruding portions (24) of the ring (20), respectively, and both side branches (23) are tilted in opposite directions to each other.

9. A synchronizer assembly for a transmission system of a motor vehicle with an assembly according to claim 1, comprising a synchromesh hub (2) firmly attached to a driven shaft (3); a clutch sleeve (6) mounted on the synchromesh hub (2), meshing with the latter and which may be axially displaced relatively to the synchromesh hub (2) by a control fork; at least one synchromesh ring (9) located adjacent to one side of the synchromesh hub (2); at least one transmission pinion (5) with a clutch crown gear (18) mounted so as to rotate by means of two pins on the driven shaft (3) and axially spaced away from the synchromesh ring (9) which may be engaged by friction with the transmission pinion (5) during an axial displacement of the clutch sleeve (6); and at least one pre-engagement ring (20) partly housed in the synchromesh hub (2) and which may be axially displaced by the clutch sleeve (6) during its displacement towards its meshing position with the clutch crown gear (18); at least two synchromesh rings (9) located on either side of the synchromesh hub (2) and between two opposite transmission pinions (5) with clutch crown gears (18) and both pre-engagement rings (20) with a planar configuration, partly housed in the synchromesh hub (2) on each side of the latter facing the corresponding synchromesh ring (9) and which are joined by at least both members (26) elastically drawing both pre-engagement rings (20) back towards each other in order to press the internal portions (22) of the latter onto corresponding portions of two opposite radial faces of a central wall (21) of the synchromesh hub (2), respectively, each pre-engagement ring (20) being displaceable towards the corresponding transmission pinion (5) by the clutch sleeve (6) which acts on portions (24) of the pre-engagement ring (20), external to the synchromesh hub (2).

10. The synchronizer assembly according to claim 9, **characterized in that** the synchromesh hub (2) comprises three externally toothed segments (25) firmly attached to the central wall (21), concentrically to the latter, protruding on either side of the central wall (21) so as to delimit two annular housings (25a) of both pre-engagement rings (20) respectively, each comprising three radially concave arched external protruding portions (24) and three radially concave arched internal retracting portions (22), each of which is located between two protruding portions (24), each protruding portion (24) protruding outside the synchromesh hub (2) through a corresponding recessed portion defined between two adjacent toothed segments (25) and each retracting portion (22) of the pre-engagement ring (20) being supported on the radially concave arched internal face (25a) of the corresponding toothed segment (25) partly defining the annular housing of the synchromesh hub (2) and **in that** both pre-engagement rings (20) are joined by three elastic members (26) for drawing the retracting portions (22) of each ring (20) back onto the portions of the corresponding radial face of the synchromesh hub (2), each elastic return member (26) being firmly attached to both protruding portions (24) facing each other of both pre-engagement rings (20) in order to draw both of these protruding portions (24) back towards each other.

11. The synchronizer assembly according to claim 10, **characterized in that** each elastic return member (26) consists of a fastener comprising at least two elastic fastening tabs (27) respectively attached to both protruding portions facing each other (24) of both pre-engagement rings (20) and connected to each other by a connecting portion (28) located below both protruding portions (24).

12. The synchronizer assembly according to claim 11, **characterized in that** the aforementioned fastener (26) comprises two other elastic tabs (27) connected to each other by the same aforementioned connecting portion (28) and respectively attached to both protruding portions facing each other (24) of both pre-engagement rings (20).

13. The synchronizer assembly according to claim 11 or 12, **characterized in that** both elastic fastening tabs (27) and the connecting portion (28) substantially have the shape of a V and are attached between both corresponding protruding portions (24) of the rings (20).

14. The synchronizer assembly according to any claims 11 to 13, **characterized in that** both elastic fastening tabs (27) are attached to the protruding portions (24) of both pre-engagement rings (20) by a detent mechanism.

15. The synchronizer assembly according to any claims 11 to 14, **characterized in that** the fastener (26) further comprises two elastic butting strips extending both fastening tabs (27) substantially parallel to the latter and protruding below the plane containing the connecting portion (28) of the fastening tabs (27) respectively and each being elastically supported on a radial face of the corresponding synchromesh ring (9).

16. The synchronizer assembly according to any claims 9 to 15, **characterized in that** the clutch sleeve (6) comprises portions forming internal ramps (8a) located on either side of both pre-engagement rings (20) and, upon axial relative displacement of the clutch sleeve (6) in a determined direction, capable of contacting the internal sides of protruding portions (24) of the corresponding pre-engagement ring (20) in order to axially and concomitantly displace the pre-engagement ring (20) and the associated synchromesh ring (9) which is brought into frictional engagement with the associated transmission pinion (5).

17. The synchronizer assembly according to any claims 10 to 16, **characterized in that** each retracting portion (22) of a pre-engagement ring (20) is connected through two side branches (23) to two adjacent protruding portions (24) of the ring (20) respectively, and both side branches (23) are tilted in opposite directions to each other.

## Patentansprüche

1. Bausatz, bestehend aus zwei voreingelegten Ringen (20) und einer Vorrichtung zum Halten der Letzteren für eine Synchrongetriebenabe (2), der in einem Synchronbausatz (1) eines Getriebes eines Fahrzeugs eingesetzt werden kann, **dadurch gekennzeichnet, dass** die Haltevorrichtung wenigstens zwei Elemente (26) umfasst, welche die voreingelegten Ringe (20) einer planaren Konfiguration verbindet und beide voreingelegten Ringe (20) im montierten Zustand der Nabe zueinander elastisch zurückzieht, zum Eindrücken von Abschnitten (22) der Letzteren an jeweils entsprechenden Abschnitten von zwei entgegen gesetzten radialen Oberflächen einer mittigen Wand (21) der Synchröngetriebenabe (1).

2. Synchrongetriebenabe mit einem Bausatz nach Anspruch 1, **dadurch gekennzeichnet, dass** die Synchrongetriebenabe (2) drei extern gezahnte Segmente (25) umfasst, die fest an der mittigen Wand (21), konzentrisch zur Letzteren befestigt sind, indem sie an einer beliebigen Seite der mittigen Wand (21) hervorstehen, um jeweils zwei ringförmige Gehäuse der beiden jeweils entsprechenden voreingelegten Ringe (20) zu begrenzen, wobei jedes drei radial konkav gebogene, herausragende Abschnitte (24) und drei radial konkav gebogene, zurückziehende Abschnitte (22) umfasst, wobei jeder zwischen zwei herausragenden Abschnitten (24) gelegen ist, jeder herausragende Abschnitt (24) zur Außenseite der Synchrongetriebenabe (2) durch einen entsprechend ausgesparten Abschnitt hervorsteht, der durch zwei benachbarte, gezahnte Segmente (25) definiert ist, und wobei jeder zurückziehende Abschnitt (22) eines voreingelegten Rings (20) an der radial konkav gebogenen internen Oberfläche (25a) des entsprechenden gezahnten Segments (25) gestützt ist, wodurch der ringförmige Gehäuseteil der Synchrongetriebenabe (2) begrenzt wird, und dass sie drei Elemente (26) zum Verbinden der beiden voreingelegten Ringe (20) durch elastisches Eindrücken der zurückziehenden Abschnitte (22) jedes Rings (20) auf die Abschnitte der entsprechenden radialen Oberfläche der Synchrongetriebenabe (2) umfasst, wobei jedes elastische Rückführungselement (26) fest an den beiden sich gegenüber liegenden, herausragenden Abschnitten (24) der beiden voreingelegten Ringe (20) befestigt ist, um beide dieser herausragenden Abschnitte (24) entgegen einander zurückzuziehen.

3. Synchrongetriebenabe nach Anspruch 2, **dadurch gekennzeichnet, dass** jedes elastische Rückführungselement (26) aus einer Befestigung besteht, die wenigstens zwei elastische Befestigungslaschen (27) umfasst, die jeweils an zwei sich gegenüber liegenden, herausragenden Abschnitten (24) der beiden voreingelegten Ringe (20) gelegen und miteinander durch einen Verbindungsabschnitt (28) verbunden ist, der sich unterhalb beider herausragenden Abschnitte (24) befindet.

4. Synchrongetriebenabe nach Anspruch 3, **dadurch gekennzeichnet, dass** die vorgenannte Befestigung (26) zwei weitere elastische Laschen (27) umfasst, die durch die selben vorgenannten Verbindungsabschnitte (28) miteinander verbunden und jeweils an zwei sich gegenüber liegenden, herausragenden Abschnitten (24) der beiden voreingelegten Ringe (20) verbunden sind.

5. Synchrongetriebenabe nach Anspruch 3 oder 4, **dadurch gekennzeichnet, dass** beide elastischen Befestigungslaschen (27) und der Verbindungsabschnitt (28) im Wesentlichen die Form eines Vs haben und zwischen beiden entsprechenden herausragenden Abschnitten (24) der voreingelegten Ringe (20) befestigt sind.

6. Synchrongetriebenabe nach einem der Ansprüche 3 bis 5, **dadurch gekennzeichnet, dass** die beiden elastischen Befestigungslaschen (27) durch einen Arretierungsmechanismus an den entsprechenden herausragenden Abschnitten (24) beider voreingelegten Ringe (20) befestigt sind.

7. Synchrongetriebenabe nach einem der Ansprüche 3 bis 6, **dadurch gekennzeichnet, dass** die Befestigung (26) ferner zwei anliegende elastische Streifen umfasst, die beide Befestigungslaschen (27) im Wesentlichen parallel zu den Letzteren erweitern und unterhalb der den jeweiligen Verbindungsabschnitt (28) der Befestigungslaschen (27) enthaltenden Ebene hervorstehen.

8. Synchrongetriebenabe nach einem der Ansprüche 2 bis 7, **dadurch gekennzeichnet, dass** jeder zurückziehende Abschnitt (22) eines voreingelegten Rings (20) mit zwei seitlichen Abzweigungen (23) an zwei benachbarten, herausragenden Abschnitten (24) des jeweiligen Rings (20) verbunden ist und beide Abzweigungen (23) in voneinander entgegen gesetzten Richtungen geneigt sind.

9. Synchrongetriebenabe für ein Getriebe eines Fahrzeugs mit einem Bausatz nach Anspruch 1, umfassend eine Synchrongetriebenabe (2), die fest an einer angetriebenen Welle (3) befestigt ist; eine Kupplungsmuffe (6), die an der Synchrongetriebenabe (2) montiert ist, die in die Letztere eingreift, und die relativ zur Synchrongetriebenabe (2) durch eine Steuerungsgabel axial versetzt werden kann; wenigstens einen Synchrongetriebering (9), der sich in der Nähe einer Seite der Synchrongetriebenabe (2) befindet; wenigstens ein Getrieberitzel (5) mit einer Kupplungszahnriemenscheibe (18), die derart montiert ist, um durch zwei an der angetriebenen Welle (3) befindlichen Stifte zu rotieren, und axial von dem Synchrongetriebering (9) weg beabstandet ist, der durch Reibung mit dem Getrieberitzel (5) während der axialen Versetzung der Kupplungsmuffe (6) eingreift; und wenigstens einen voreingelegten Ring (20), der teilweise in der Synchrongetriebenabe (2) untergebracht ist und durch die Kupplungsmuffe (6) während ihrer Versetzung zu ihrer ineinander greifenden Position mit der Kupplungszahnriemenscheibe (18) versetzt werden kann; wenigstens zwei Synchrongetrieberinge (9), die sich an einer beliebigen Seite der Synchrongetriebenabe (2) und zwischen zwei gegenüber liegenden Getrieberitzeln (5) mit Kupplungszahnriemenscheiben (18) befinden und wobei beide voreingelegten Ringe (20) mit einer planaren Konfiguration, teilweise in der Synchrongetriebenabe (2) untergebracht, an jeder Seite der Letzteren dem entsprechenden Synchrongetriebering (9) zugewandt sind, und welche durch wenigstens beide Elemente (26) verbunden sind, wobei sie die beiden voreingelegten Ringe (20) elastisch zu einander zurückziehen, um die internen Abschnitte (22) der Letzteren in entsprechende Abschnitte der beiden gegenüberliegenden radialen Oberflächen einer mittigen Wand (21) der Synchrongetriebenabe (2) einzudrücken, wobei jeder voreingelegte Ring (20) jeweils zum entsprechenden Getrieberitzel (5) durch die Kupplungsmuffe (6) versetzt wird, die auf die Abschnitte (24) des voreingelegten Rings (20) extern der Synchrongetriebenabe (2) gelegen eingreift.

10. Synchronbausatz nach Anspruch 9, **dadurch gekennzeichnet, dass** die Synchrongetriebenabe (2) drei extern gezahnte Segmente (25) umfasst, die fest an der mittigen Wand (21) befestigt sind, konzentrisch zur Letzteren an einer beliebigen Seite der mittigen Wand (21) hervorragen, um zwei ringförmige Gehäuse (25a) beider voreingelegten Ringe (20) jeweils zu begrenzen, wobei jeder drei radial konkav gebogene extern herausragende Abschnitte (24) und drei radial konkav gebogene intern zurückziehende Abschnitte (22) umfasst, wobei jeder davon zwischen zwei herausragenden Abschnitten (24) gelegen ist, jeder herausragende Abschnitt (24) außerhalb der Synchrongetriebenabe (2) durch einen entsprechend ausgesparten Abschnitt hervorragt, der zwischen zwei benachbarten, gezahnten Segmenten (25) definiert ist, und jeder zurückziehende Abschnitt (22) des voreingelegten Rings (20) an der radial konkav gebogenen internen Oberfläche (25a) des entsprechenden gezahnten Segments (25) gestützt ist, das teilweise das ringförmige Gehäuse der Synchrongetriebenabe (2) definiert, und dass beide voreingelegten Ringe (20) durch drei elastische Elemente (26) zum Zurückziehen der zurückziehenden Abschnitte (22) jedes Rings (20) in den Abschnitt der entsprechenden radialen Oberfläche der Synchrongetriebenabe (2) verbunden ist, jedes elastische Rückführungselement (26) fest an beiden einander zugewandten herausragenden Abschnitten (24) beider voreingelegten Ringe (20) befestigt ist, um beide dieser herausragenden Abschnitte (24) entgegen einander zurückzuziehen.

11. Synchronbausatz nach Anspruch 10, **dadurch gekennzeichnet, dass** jedes elastische Rückführungselement (26) aus einer Befestigung besteht, umfassend wenigstens zwei elastische Befestigungslaschen (27), die jeweils an beiden sich zugewandten herausragenden Abschnitten beider voreingelegten Ringe (20) befestigt sind und durch einen Verbindungsabschnitt (28), der sich unterhalb beider herausragenden Abschnitte (24) befindet, miteinander verbunden sind.

12. Synchronbausatz nach Anspruch 11, **dadurch gekennzeichnet, dass** die vorgenannte Befestigung (26) zwei weitere elastische Laschen (27) umfasst, die durch die selben vorgenannten Verbindungsabschnitte (28) miteinander verbunden und jeweils an beiden sich zugewandten herausragenden Abschnitten (24) beider voreingelegten Ringe (20) befestigt sind.

13. Synchronbausatz nach Anspruch 11 oder 12, **dadurch gekennzeichnet, dass** beide elastischen Befestigungslaschen (27) und der Verbindungsabschnitt (28) im Wesentlichen die Form eines Vs aufweisen und zwischen beiden entsprechenden herausragenden Abschnitten (24) der Ringe (20) befestigt sind.

14. Synchronbausatz nach einem der Ansprüche 11 bis 13, **dadurch gekennzeichnet, dass** beide elastischen Befestigungslaschen (27) durch einen Arretierungsmechanismus an den herausragenden Abschnitten (24) beider voreingelegten Ringe (20) befestigt sind.

15. Synchronbausatz nach einem der Ansprüche 11 bis 14, **dadurch gekennzeichnet, dass** die Befestigung (26) ferner zwei elastische anliegende Streifen umfasst, die beide Befestigungslaschen (27) im Wesentlichen parallel zur Letzteren erweitert und unterhalb der Ebene hervorragen, welche den Verbindungsabschnitt (28) der jeweiligen Befestigungslaschen (27) enthält und wobei jedes elastisch an einer radialen Oberfläche des entsprechenden Synchrongetrieberings (9) gestützt ist.

16. Synchronbausatz nach einem der Ansprüche 9 bis 15, **dadurch gekennzeichnet, dass** die Kupplungsmuffe (6) Abschnitte umfasst, die interne Rampen (8a) bilden, die sich an einer beliebigen Seite beider voreingelegten Ringe (20) befinden und nach einer axialen relativen Versetzung der Kupplungsmuffe (6) in einer festgelegten Richtung fähig sind, die internen Seiten der herausragenden Abschnitte (24) des entsprechenden voreingelegten Rings (20) kontaktieren, um den voreingelegten Ring (20) und den zugehörigen Synchrongetriebering (9), der in Reibungswirkung mit dem Getrieberitzel (5) gebracht wird, axial und begleitend zu versetzen.

17. Synchronbausatz nach einem der Ansprüche 10 bis 16, **dadurch gekennzeichnet, dass** der zurückziehende Abschnitt (22) eines voreingelegten Rings (20) durch zwei seitliche Abzweigungen (23) mit zwei benachbarten herausragenden Abschnitten (24) des Rings (20) jeweils verbunden ist und beide seitlichen Abzweigungen (23) in voneinander entgegen gesetzten Richtungen geneigt sind.
